# FASCICULE DE BREVET EUROPEEN

(11) **EP 0 867 856 B1**
(45) Date de publication et mention de la délivrance du brevet: **26.10.2005**
(21) Numéro de dépôt: 98200805.4
(22) Date de dépôt: 13.03.1998
(51) Int. Cl.: G10L 11/02

(54) **"Méthode et dispositif de detection d'activité vocale"**
Verfahren und Vorrichtung zur Sprachdetektion
Method and apparatus for vocal activity detection

(30) Priorité: 25.03.1997 FR 9703616
(43) Date de publication de la demande: 30.09.1998
(73) Titulaire: Koninklijke Philips Electronics N.V., 5621 BA Eindhoven (NL)
(72) Inventeur: Sonnic, Estelle, Société Civile S.P.I.D., 75008 Paris (FR)
(74) Mandataire: Landousy, Christian

(56) Documents cités:
- EP-A- 0 392 412
- EP-A- 0 451 796
- US-A- 4 052 568
- US-A- 5 307 441
- YATSUZUKA Y: "Highly sensitive speech detector and high-speed voiceband data discriminator in DSI-ADPCM systems" IEEE TRANSACTIONS ON COMMUNICATIONS, APRIL 1982, USA, vol. COM-30, no. 4, ISSN 0090-6778, pages 739-750, XP002049112

## Description

La présente invention concerne une méthode de détection d'activité vocale dans des signaux d'entrée composés de trames numérisées successives de durée prédéterminée incluant des signaux de parole, des signaux de bruit et des moments de silence, ladite méthode appliquant à la trame courante une première étape de calcul de paramètres d'énergie et de taux de passage par zéro du signal de bruit centré et une deuxième étape de classification comme bruit ou comme parole et de traitement de ces signaux selon les valeurs d'énergie et de taux de passage par zéro calculées, ladite classification comme bruit ou comme parole étant liée à l'énergie desdits signaux d'entrée par rapport à un seuil B adaptable et au taux de passage par zéro calculé. L'invention concerne également un dispositif de détection d'activité vocale pour la mise en oeuvre de cette méthode.

Cette invention est utilisable dans toute application où interviennent des signaux de parole (et non des signaux purement audio) et où il est souhaitable d'effectuer une discrimination entre des plages sonores avec paroles, bruit de fond et moments de silence et des plages sonores qui ne contiennent que du bruit ou des moments de silence. Elle peut, en particulier, constituer un mode de traitement préalable utile dans des applications de reconnaissance de phrases ou de mots isolés.

La demande de brevet EP 0392412 décrit un appareil de détection d'activité vocale dans lequel il est notamment prévu pour chaque trame successive des moyens de calcul de l'énergie et du taux de passage par zéro, et des moyens de comparaison (à des seuils) de la valeur absolue de la différence entre les énergies attachées à des trames successives, ainsi que de comparaison de l'énergie de la trame courante à un seuil. En ce qui concerne l'énergie de la trame courante, le seuil ne peut cependant, tout au plus, prendre que deux valeurs distinctes, bien déterminées et donc non adaptables.

Le brevet US 5307441 décrit alors un détecteur d'activité vocale dans lequel l'énergie de chaque trame est comparée à un seuil adaptable, mais l'adaptation consiste simplement à suivre le niveau de bruit pour placer le seuil de comparaison de l'énergie juste au-dessus de son énergie moyenne sur un intervalle de temps important (une centaine de trames).

La demande de brevet EP 0451796 décrit certes des moyens de comparer l'énergie d'une trame à un seuil variable, mais en fait les valeurs de seuil variables ne diffèrent les unes des autres que d'une constante, appelée "gamma", et non d'une valeur variable en fonction de la valeur de l'énergie par rapport à la valeur de seuil elle-même, comme la description suivante de l'invention va le montrer.

Un premier but de l'invention est d'optimiser la bande passante réservée à des signaux de parole par rapport à d'autres types de signaux, dans le cas de réseaux de transmission transportant habituellement des données autres que de la parole seule (il faut vérifier que la parole n'occupe pas toute la bande passante, c'est-à-dire que le passage simultané de la parole et des autres données est bien possible), ou aussi, par exemple, d'optimiser la place occupée en mémoire par les messages stockés dans un répondeur téléphonique numérique.

A cet effet l'invention concerne une méthode telle que définie dans le préambule de la description et qui est en outre caractérisée en ce que la valeur dudit seuil B varie en fonction de l'énergie En de la trame courante par rapport audit seuil lui-même.

Un autre but de l'invention est de proposer un dispositif de détection d'activité vocale permettant une mise en oeuvre simple de la méthode présentée.

A cet effet l'invention concerne une utilisation de ladite méthode dans un dispositif de détection d'activité vocale dans des signaux d'entrée composés de trames numérisées successives de durée prédéterminée incluant des signaux de parole, des signaux de bruit et des moments de silence, par application à la trame courante d'une première étape de calcul de paramètres d'énergie et de taux de passage par zéro du signal de bruit centré et d'une deuxième étape de classification comme bruit ou comme parole et de traitement de ces signaux selon les valeurs d'énergie et de taux de passage par zéro calculées, ladite classification comme bruit ou comme parole étant liée à l'énergie desdits signaux d'entrée par rapport à un seuil B adaptable et au taux de passage par zéro calculé, ledit dispositif étant caractérisé en ce qu'il comprend en série un étage d'initialisation des variables utilisées ultérieurement, pour le réglage initial desdites variables au cours d'un premier état d'initialisation temporaire d'une durée de NINIT trames dans lequel le signal d'entrée est toujours considéré comme du signal de parole, un étage de calcul d'énergie de chaque trame et du taux de passage par zéro du signal de bruit centré, ainsi qu'un étage de test et de traitement réalisé sous la forme dite d'un automate à trois états et prévu pour basculer ledit dispositif, après le passage temporaire dans ledit état d'initialisation, dans l'un ou l'autre d'un deuxième et d'un troisième état dans lesquels le selon lesdits calculs, chaque signal d'entrée est classé respectivement comme du signal "parole + bruit + silence" ou comme du signal "bruit + silence".

Les particularités et avantages de l'invention apparaîtront maintenant de façon plus détaillée dans la description qui suit et dans les dessins annexés donnés à titre d'exemples non limitatifs et dans lesquels :
- la figure 1 montre le principe général de la mise en oeuvre de la méthode conforme à l'invention ;
- la figure 2 illustre de façon plus détaillée cette mise en oeuvre et met notamment en valeur les trois états que peut occuper le dispositif de détection assurant cette mise en oeuvre ;
- les figures 3 à 5 explicitent les traitements effectués dans ledit dispositif lorsqu'il se trouve dans chacun de ces trois états.

Avant de décrire l'invention, on précisera tout d'abord quelques conditions d'utilisation de la méthode proposée, à savoir, tout d'abord, que les signaux d'entrée, issus d'une seule source d'entrée, correspondent à des signaux vocaux (ou de parole) émis par des être humains et mêlés à du bruit de fond pouvant avoir des origines très diverses (bruit de fond de restaurants, de bureaux, de voitures qui passent, etc...). Par ailleurs, ces signaux d'entrée doivent être numérisés avant d'être traités conformément à l'invention, et ce traitement implique que l'on puisse utiliser des plages suffisantes (ou trames) de ces signaux d'entrée numérisés, par exemple des trames successives d'environ 5 à 20 millisecondes. Enfin, on précisera que la méthode proposée, indépendante de tout autre traitement ultérieur appliqué aux signaux de parole, a été ici testée avec des signaux numériques échantillonnés à 8 kHz et filtrés pour ne se situer que dans la bande de fréquence téléphonique (300-3400 Hz).

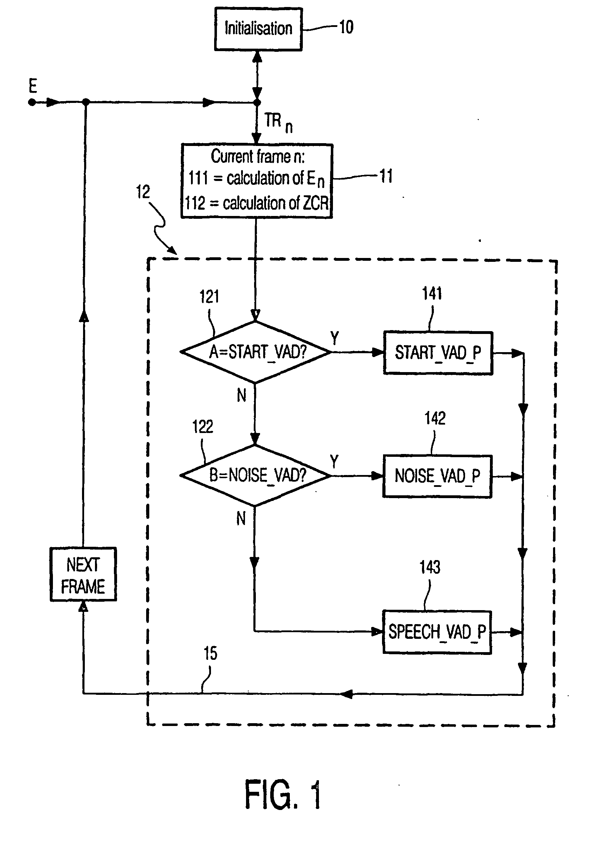

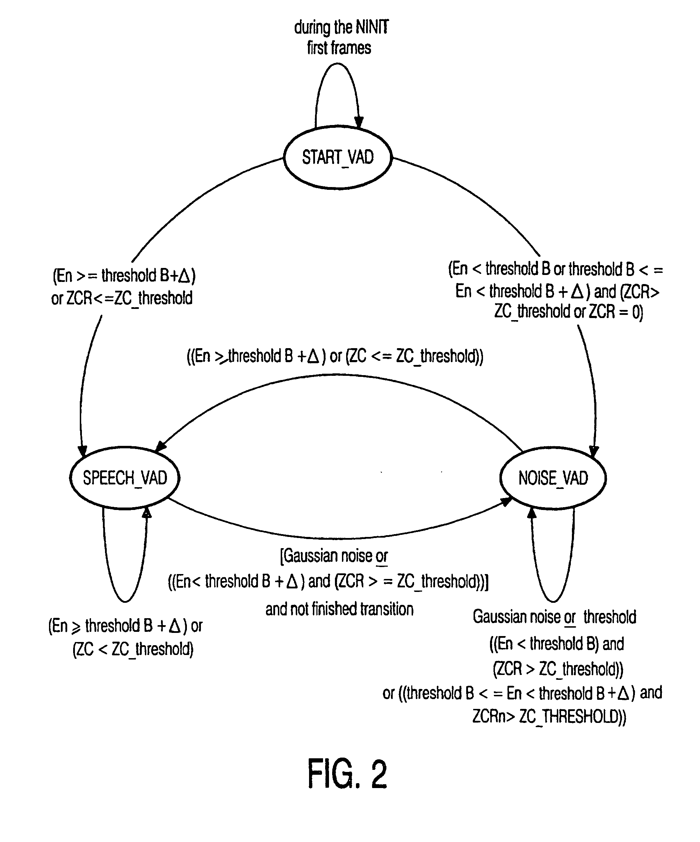

Le principe de la mise en oeuvre de la méthode selon l'invention est illustré sur la figure 1. Après une étape préalable, dans un étage 10, d'initialisation des variables utilisées dans le déroulement du processus, chaque trame courante TRₙ des signaux d'entrée reçus sur l'entrée E subit dans un étage de calcul 11 une première étape de calcul de l'énergie En de cette trame et du taux de passage par zéro du signal de bruit centré pour cette trame (on précisera plus loin la signification de cette variable, qu'on appellera ZCR, ou aussi ZC, dans la description, d'après son équivalent en anglais : Zero-Crossing Rate). Une deuxième étape permet alors, dans un étage 12 de test et de traitement, de comparer l'énergie à un seuil adaptatif et le ZRC à un seuil fixe pour décider si le signal d'entrée représente un signal "parole + bruit + silence" ou un signal "bruit + silence" seul. Cette deuxième étape est réalisée dans ce qu'on appellera ci-après un automate à trois états, dont le fonctionnement est illustré sur la figure 2. Ces trois états sont également mis en évidence sur la figure 1.

Le premier état, START_VAD, est un état de départ, ou d'initialisation, noté A sur la figure 1. A chaque lancement du traitement selon l'invention, le système entre dans cet état, où le signal d'entrée est toujours considéré comme du signal de parole (même si du bruit est aussi détecté). Cet état d'initialisation permet notamment le réglage des variables internes, et est maintenu pendant le temps nécessaire (pendant plusieurs trames consécutives, ce nombre de trames noté NINIT étant bien entendu réglable).

Le deuxième état, PAROLE_VAD, correspond au cas où le signal d'entrée est considéré comme du signal "parole + bruit + silence". Le troisième état, BRUIT_VAD, correspond au cas où le signal d'entrée est considéré comme du signal "bruit + silence" seulement (on notera ici que les termes de "premier" et de "deuxième" état ne définissent pas un ordre d'importance, mais sont simplement destinés à les différencier). Après les NINIT premières trames correspondant à l'état d'initialisation destiné au réglage des variables, le système se trouve toujours dans ce deuxième ou dans ce troisième état. Le passage d'un état à l'autre sera décrit plus loin.

Après initialisation, la première étape de calcul dans l'étage 11 comprend deux sous-étapes, celle, effectuée dans un circuit de calcul 111, du calcul de l'énergie de la trame courante, et celle du calcul du ZCR pour cette trame, effectuée dans un circuit de calcul 112.

En général, un signal de parole (c'est-à-dire un signal "parole + bruit + silence") est plus énergétique qu'un signal de "bruit + silence" seul. Il faudrait vraiment que le bruit de fond soit très élevé pour qu'il ne soit pas détecté comme un bruit (c'est-à-dire comme un signal "bruit + silence") mais comme un signal de parole. Le circuit 111 de calcul d'énergie prévoit donc d'associer à l'énergie un seuil variable selon la valeur de celle-ci, en vue de tests qui vont être réalisés de la façon suivante :
(a) si l'énergie En de la trame courante est inférieure à un certain seuil B (Eₙ < seuil B), la trame courante est classée comme BRUIT ;
(b) si l'énergie En est au contraire supérieure ou égale au seuil B (Eₙ > = seuil B), la trame courante est classée comme PAROLE.

En fait, on choisit d'avoir un seuil B adaptatif en fonction du bruit de fond, c'est-à-dire par exemple de l'ajuster en fonction de l'énergie moyenne E du signal "bruit + silence", et en autorisant des fluctuations du niveau de ce signal "bruit + silence". Le critère d'adaptation est alors le suivant :
(i) si (Eₙ < seuil B), alors seuil B est remplacé par seuil B - α.E, où α est un coefficient constant déterminé empiriquement, mais compris ici entre 0 et 1 ;
(ii) si (seuil B < En < seuil B + Δ), alors seuil B est remplacé par seuil B + α.E (Δ = valeur de seuil complémentaire).

Dans ces deux situations (i) et (ii), le signal est considéré comme du "bruit + silence", et la moyenne E est mise à jour. Sinon, si Eₙ ≥ seuil B + Δ, le signal est considéré comme de la parole, et la moyenne E reste inchangée. Si l'on veut éviter que le seuil B n'augmente ou ne diminue trop, on impose à sa valeur de rester comprise entre deux valeurs de seuil (SEUIL B_MIN et SEUIL B_MAX), déterminées empiriquement. Par ailleurs, la valeur de Δ elle-même est ici plus ou moins grande selon que le signal d'entrée (quel qu'il soit : parole seule, bruit + silence, ou un mélange des deux) est plus ou moins élevé. Par exemple, en désignant par Eₙ₋₁ l'énergie de la trame précédente TRₙ₋₁ du signal d'entrée (qui est mémorisée), on prendra une décision du type suivant :
(i) si |Eₙ - Eₙ₋₁| < seuil, Δ = DELTA1 ;
(ii) sinon, Δ = DELTA2 ;
les deux valeurs possibles de Δ étant, là encore, déterminées de façon empirique.

Le calcul d'énergie dans le circuit 111 étant effectué, on lui associe le calcul du ZCR pour la trame courante, effectué dans le circuit 112. Ces calculs dans l'étage 11 sont suivis d'une opération de décision quant à l'état dans lequel se trouve le dispositif après mise en oeuvre des diverses étapes décrites. Plus précisément, ce processus de décision, effectué dans un étage 12, comprend deux tests essentiels 121 et 122, qui vont être maintenant décrits successivement.

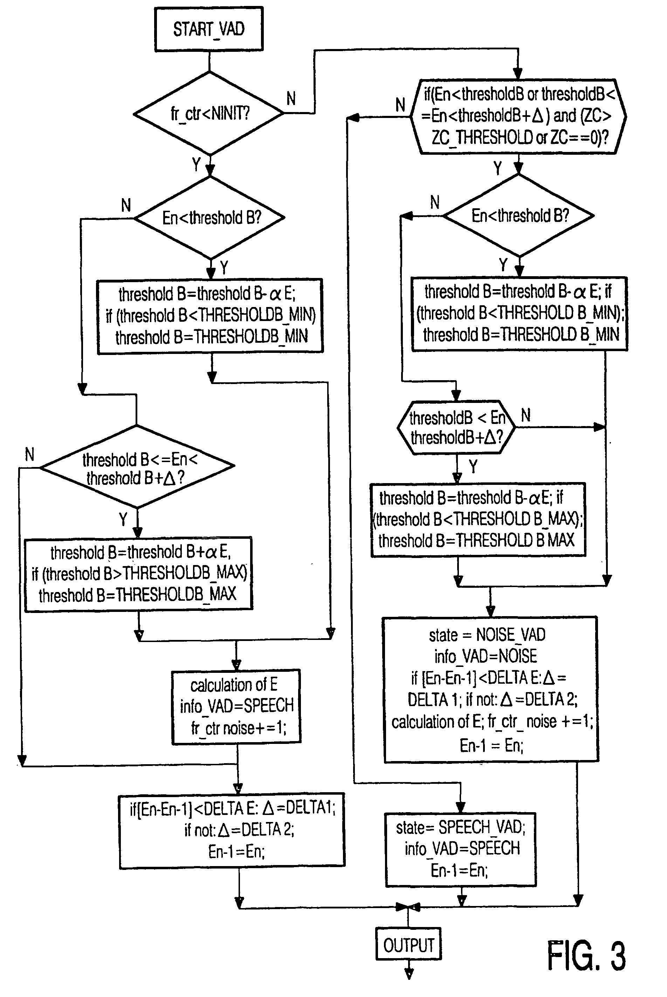

On a vu tout d'abord qu'à chaque lancement du traitement selon l'invention, l'état de départ était A = START_VAD, pendant NINIT trames consécutives. Le premier test 121 de l'état du dispositif concerne le nombre de trames qui se sont présentées à l'entrée du dispositif et conduit, tant que ce nombre de trames présentées reste inférieur à NINIT, à la conclusion que l'état est et reste START_VAD (réponse Y en sortie du test 121). Dans ce cas, le traitement qui en résulte, appelé START_VAD_P et exécuté dans le bloc 141, est illustré sur la figure 3, commentée plus loin. On peut cependant indiquer dès à présent qu'au cours de ce traitement START_VAD_P il arrivera nécessairement que l'état observé soit non plus l'état de départ START_VAD, mais l'un des autres états, BRUIT_VAD ou PAROLE_VAD, la distinction entre l'un ou l'autre étant effectuée lors du test 122.

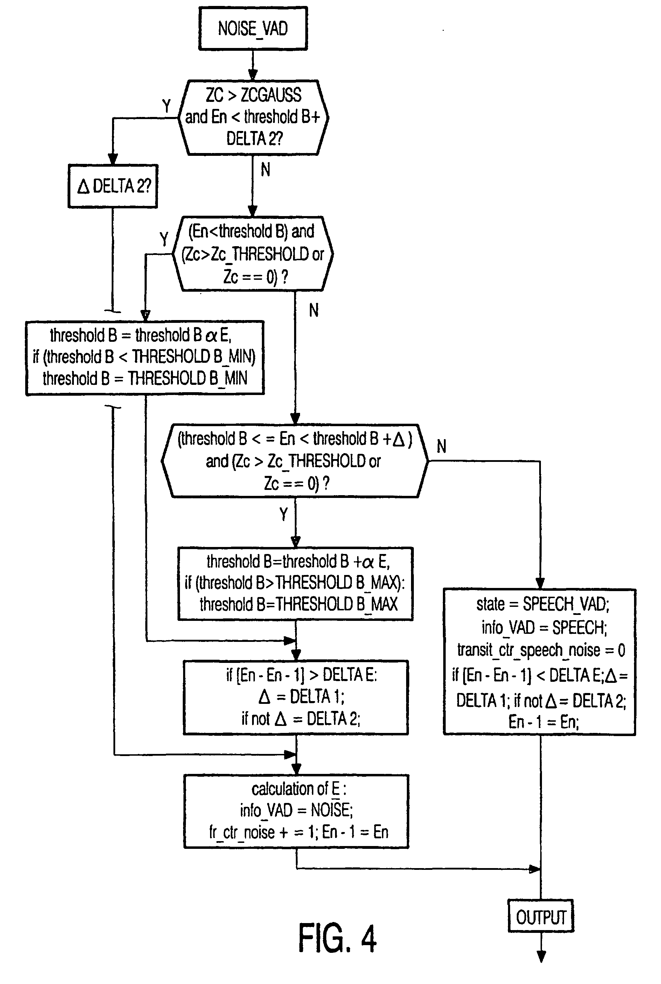

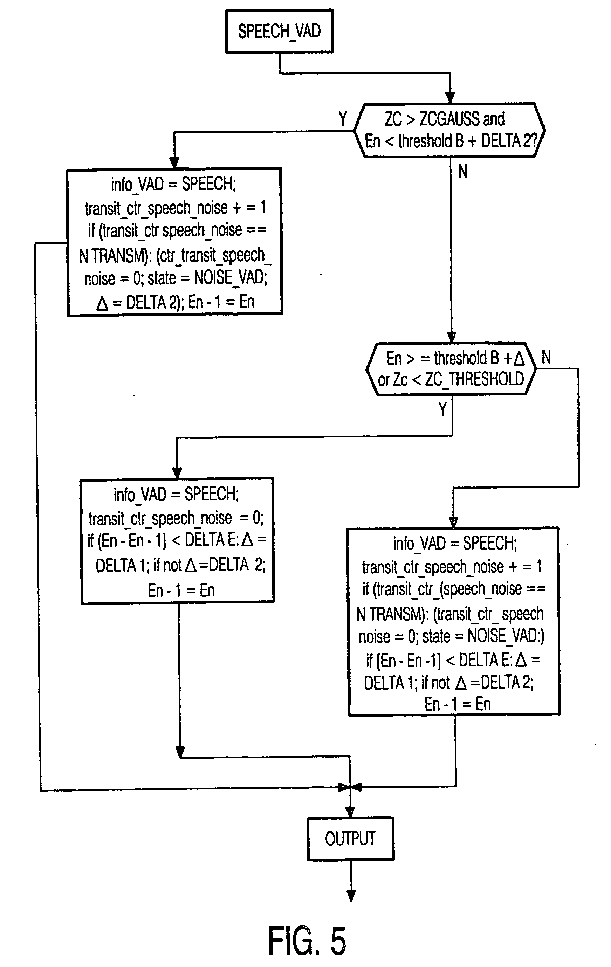

En effet, si, en sortie du premier test 121, la réponse est cette fois N (c'est-à-dire : "non, l'état n'est plus START_VAD"), le deuxième test 122 examine si l'état observé est B = BRUIT_VAD, avec réponse oui ou non comme précédemment. Si la réponse est oui (réponse Y en sortie de 122), le traitement résultant, appelé BRUIT_VAD_P et exécuté dans le bloc 142, est illustré sur la figure 4. Si la réponse est non (réponse N en sortie de 122), le traitement résultant, exécuté dans le bloc 143, est appelé PAROLE_VAD_P et est illustré sur la figure 5 (comme pour START_VAD_P, les figures 4 et 5 vont être commentées ci-dessous). Quel que soit celui des trois traitements qui est effectué à la suite de ces tests 121 et 122, il est suivi d'un rebouclage vers l'entrée du dispositif, par l'intermédiaire de la connexion 15 reliant la sortie des blocs 141 à 143 à l'entrée du circuit 11. La trame suivante va pouvoir ainsi être examinée et traitée.

Les figures 3, 4 et 5, dont les aspects essentiels sont résumés sur la figure 2, décrivent donc en détail le déroulement des traitements START_VAD_P, BRUIT_VAD_P et PAROLE_VAD_P. Les variables utilisées sur ces figures sont les suivantes, explicitées par catégorie :
(1) énergie : En désigne l'énergie de la trame courante, Eₙ₋₁ celle (mémorisée) de la trame précédente, et E l'énergie moyenne du bruit de fond ;
(2) compteurs :
   (a) un compteur cpt_trm compte le nombre de trames acquises depuis le début de la mise en oeuvre de la méthode (ce compteur n'est utilisé que dans l'état START_VAD, et la valeur qu'il peut atteindre est au plus égale à NINIT) ;
   (b) un compteur cpt_trm_bruit compte le nombre de trames détectées comme bruit depuis le début de la mise en oeuvre de la méthode (pour éviter des dépassements de calculs, on ne le met à jour que lorsque la valeur qu'il atteint est inférieure à une certaine valeur, au-delà de laquelle on ne l'utilise plus) ;
   (c) un compteur cpt_transit, utilisé pour le lissage des transitions parole/bruit, évite, en différant conditionnellement le basculement de l'état PAROLE_VAD vers l'état BRUIT_VAD, de tronquer les fins de phrase ou de détecter comme du bruit de fond les espaces inter-syllabes (ce qui hacherait complètement le signal de parole) :
      - si l'on se trouve dans l'état parole et que du bruit est détecté, ce compteur cpt_transit est incrémenté ;
      - si de la parole est à nouveau détectée, ce compteur est remis à zéro, sinon on continue de l'incrémenter jusqu'à ce qu'une valeur de seuil, N-TRANSM, soit atteinte : cette confirmation que le signal d'entrée est bien du bruit de fond entraîne maintenant le basculement dans l'état BRUIT_VAD, et le compteur cpt_transit est remis à zéro ;
(3) seuils : seuil B désigne le seuil utilisé pour distinguer la parole d'un bruit de fond de faible niveau (SEUIL B_MIN et SEUIL B_MAX sont ses valeurs minimale et maximale autorisées), α la valeur du coefficient de mise à jour de seuil B, et Δ la valeur de seuil complémentaire utilisée pour distinguer la parole d'un bruit de fond de niveau élevé (ses deux valeurs possibles sont DELTA1 et DELTA2, déterminée grâce à DELTAE, qui est le seuil utilisé avec |Eₙ-Eₙ₋₁| et qui permet de savoir, en vue de la mise à jour de Δ, si le signal d'entrée est très fluctuant ou non) ;
(4) taux de ZCR de la trame courante : ce taux de passage par zéro du signal de bruit centré fluctue considérablement :
   - certains types de bruit sont très agités dans le temps, et le signal de bruit (centré, c'est-à-dire à qui on a ôté sa moyenne) passe alors souvent par zéro, d'où un ZRC élevé (c'est le cas, en particulier, des bruits de fond de type gaussien) ;
   - lorsque le bruit de fond est du type brouhaha (restaurants, bureaux, voisins qui discutent,...), les caractéristiques du bruit de fond se rapprochent de celles d'un signal de parole, et le ZCR présente des valeurs plus faibles ;
   - certains types de sons de parole sont dit voisés (voiced) et présentent une certaine périodicité : c'est le cas des voyelles, auxquelles correspondent une forte énergie et un ZCR faible ;
   - d'autres types de sons de parole, dits non voisés (unvoiced), ont au contraire, par rapport aux sons voisés, une énergie plus faible et un ZCR plus élevé : c'est le cas, notamment, des consonnes fricatives et plosives (de tels signaux seraient classés comme bruit , puisque leur ZCR dépasse un seuil donné ZCGAUSS, si l'on ne complétait pas ce test par celui sur l'énergie : ces signaux ne seraient confirmés comme bruit que si leur énergie restait au-dessous de (seuil B + DELTA2), mais restent classés comme parole dans le cas contraire) ;
   - enfin le cas particulier d'un ZCR nul (ZC = 0) doit être également pris en compte : cela correspond à un signal d'entrée plat (tous les échantillons ont la même valeur) qui sera alors systématiquement assimilé à du "bruit + silence" ;
(5) signal de sortie INFO_VAD : à l'issue de chaque traitement (dans l'un des blocs 141 à 143), une décision est prise au sujet de la trame courante, cette dernière étant en effet déclarée soit comme signal de parole (INFO_VAD = PAROLE), soit comme signal de bruit de fond + silence (INFO_VAD = BRUIT).

Ces traitements dans les blocs 141 à 143 comprennent, comme indiqué, soit des tests sur l'énergie et sur le ZCR, indiqués dans les encadrements en forme de losange (à l'exception du premier test dans le premier traitement START_VAD_P, qui est un test de la valeur du compteur cpt_trm, pour vérifier que le nombre de trames est encore inférieur à la valeur NINIT et qu'on se trouve toujours en phase d'initialisation du dispositif), soit des opérations qui sont commandées par les résultats de ces tests (modification éventuelle de valeurs de seuil, calcul d'énergie moyenne, définition de l'état du dispositif, incrémentation ou remise à zéro de compteurs, passage à la trame suivante, etc...), et qui sont alors indiquées dans les encadrements de forme rectangulaire.

La méthode et le dispositif ainsi proposés présentent en définitive une complexité très modérée, ce qui rend leur implantation en temps réel particulièrement facile. On peut aussi observer qu'il leur est associé un faible encombrement mémoire. Bien entendu des variantes de cette invention peuvent être proposées, sans pour autant sortir du cadre de celle-ci. On peut en particulier modifier la nature du test 122 et examiner, après un résultat négatif du test 121, si le nouvel état observé est PAROLE_VAD (et non plus BRUIT_VAD), avec réponse oui ou non (Y ou N) comme précédemment. Si la réponse est oui (Y en sortie de 122), le traitement résultant sera PAROLE_VAD_P (exécuté alors dans le bloc 142), sinon ce traitement sera BRUIT_VAD_P (exécuté alors dans le bloc 143).

## Revendications

1. Méthode de détection d'activité vocale dans des signaux d'entrée composés de trames numérisées successives de durée prédéterminée incluant des signaux de parole, des signaux de bruit et des moments de silence, ladite méthode appliquant à la trame courante une première étape de calcul de paramètres d'énergie et de taux de passage par zéro du signal de bruit centré et une deuxième étape de classification comme bruit ou comme parole et de traitement de ces signaux selon les valeurs d'énergie et de taux de passage par zéro calculées, ladite classification comme bruit ou comme parole étant liée à l'énergie desdits signaux d'entrée par rapport à un seuil B adaptable et au taux de passage par zéro calculé, ladite méthode étant en outre, **caractérisée en ce que** la valeur dudit seuil B varie en fonction de l'énergie Eₙ de la trame courante par rapport audit seuil lui-même.

2. Méthode selon la revendication 1, **caractérisée en ce que** les variations dudit seuil B en fonction de la valeur de l'énergie Eₙ de la trame courante par rapport au seuil sont limitées à une valeur maximale Δ au-dessus dudit seuil.

3. Méthode selon la revendication 2, **caractérisée en ce que** ladite valeur maximale Δ prend une valeur différente selon la valeur de l'énergie Eₙ de la trame courante par rapport à la valeur correspondante Eₙ₋₁ pour la trame précédente.

4. Méthode selon la revendication 3, **caractérisée en ce que** les trames initialement classées comme bruit en raison d'un taux de passage par zéro élevé sont soumises à une comparaison de leur énergie moyenne Eₙ au seuil (B + Δ).

5. Utilisation de la méthode selon l'une des revendications 1 à 4 dans un dispositif de détection d'activité vocale dans des signaux d'entrée composés de trames numérisées successives de durée prédéterminée incluant des signaux de parole, des signaux de bruit et des moments de silence, par application à la trame courante d'une première étape de calcul de paramètres d'énergie et de taux de passage par zéro du signal de bruit centré et d'une deuxième étape de classification comme bruit ou comme parole et de traitement de ces signaux selon les valeurs d'énergie et de taux de passage par zéro calculées, ladite classification comme bruit ou comme parole étant liée à l'énergie desdits signaux d'entrée par rapport à un seuil B adaptable et au taux de passage par zéro calculé, ledit dispositif étant **caractérisé en ce qu'**il comprend en série un étage (10) d'initialisation des variables utilisées ultérieurement, pour le réglage initial desdites variables au cours d'un premier état d'initialisation temporaire d'une durée de NINIT trames dans lequel le signal d'entrée est toujours considéré comme du signal de parole, un étage (11) de calcul d'énergie de chaque trame et du taux de passage par zéro du signal de bruit centré, ainsi qu'un étage (12) de test et de traitement réalisé sous la forme dite d'un automate à trois états et prévu pour basculer ledit dispositif, après le passage temporaire dans ledit état d'initialisation, dans l'un ou l'autre d'un deuxième et d'un troisième état dans lesquels, selon lesdits calculs, chaque signal d'entrée est classé respectivement comme du signal "parole + bruit + silence" ou comme du signal "bruit + silence".

## Patentansprüche

1. Verfahren zur Detektion von Sprachaktivität in Eingangssignalen, zusammengesetzt aus aufeinanderfolgenden digitalisierten Frames von vorbestimmter Dauer mit Sprachsignalen, Rauschsignalen und Ruhemomenten, wobei das besagte Verfahren den laufenden Frame einem ersten Schritt zur Berechnung der Energieparameter und der Durchgangszahl durch Null des zentrierten Rauschsignals und einem zweiten Schritt zur Einteilung als Rauschen oder als Sprache und zur Verarbeitung dieser Signale gemäß den berechneten Energiewerten und der Durchgangszahl durch Null unterzieht, die besagte Einteilung als Rauschen oder als Sprache an die Energie der besagten Eingangssignale bezüglich eines Grenzwerts B, anpassbar und mit berechneter Durchgangszahl durch Null, gebunden und das besagte Verfahren außerdem **dadurch gekennzeichnet ist, dass** der besagte Grenzwert B entsprechend der Energie Eₙ des laufenden Frames in Bezug auf den besagten Grenzwert selbst variiert.

2. Verfahren nach Anspruch 1, **dadurch gekennzeichnet, dass** die Variationen des besagten Grenzwerts B unter Berücksichtigung des Werts der Energie Eₙ des laufenden Frames in Bezug auf den Grenzwert auf einen maximalen Wert Δ über dem besagten Grenzwert begrenzt werden.

3. Verfahren nach Anspruch 2, **dadurch gekennzeichnet, dass** der besagte maximale Wert Δ einen unterschiedlichen Wert entsprechend dem Wert der Energie Eₙ des laufenden Frames bezüglich des Werts entsprechend Eₙ₋₁ für den vorhergehenden Frame annimmt.

4. Verfahren nach Anspruch 3, **dadurch gekennzeichnet, dass** die aufgrund einer hohen Durchgangszahl durch Null ursprünglich als Rauschen eingeteilten Frames einem Vergleich ihrer durchschnittlichen Energie Eₙ mit dem Grenzwert (B + Δ) unterzogen werden.

5. Verwendung des Verfahrens nach einem der Ansprüche 1 bis 4 in einer Vorrichtung zur Detektion von Sprachaktivität in Eingangssignalen, zusammengesetzt aus aufeinanderfolgenden digitalisierten Frames vorbestimmter Dauer einschließlich Sprachsignalen, Rauschsignalen und Ruhemomenten, durch Anwendung an den laufenden Frame eines ersten Schritts zur Berechnung der Energieparameter und der Durchgangszahl durch Null des zentrierten Rauschsignals und eines zweiten Schritts zur Einteilung als Rauschen oder als Sprache und zur Verarbeitung dieser Signale entsprechend den berechneten Energiewerten und der Durchgangszahl durch Null, wobei die besagte Einteilung als Rauschen oder als Sprache an die Energie der besagten Eingangssignale bezüglich eines anpassbaren Grenzwerts B und an die berechnete Durchgangszahl durch Null gebunden und die besagte Vorrichtung **dadurch gekennzeichnet ist, dass** sie in Serie eine Stufe (10) zur Initialisierung der später verwendeten Variablen für die anfängliche Regelung der besagten Variablen im Laufe eines ersten temporären Initialisierungszustands eine Dauer von NINIT Frames, in der das Eingangssignal weiterhin als Sprachsignal betrachtet wird, eine Stufe (11) zur Berechnung der Energie jedes Rasters und der Durchgangszahl durch Null des zentrierten Rauschsignals sowie eine Stufe (12) für den Test und die Verarbeitung umfasst, verwirklicht in der Form eines so genannten Automaten mit drei Zuständen und vorgesehen zum Umschalten der besagten Vorrichtung nach dem temporären Übergang in den besagten Initialisierungszustand in den einen oder anderen eines zweiten und eines dritten Zustands, in denen entsprechend den besagten Berechnungen jedes Eingangssignal respektive als Signal "Sprache + Rauschen + Ruhe" oder als Signal "Rauschen + Ruhe" eingestuft wird.

## Claims

1. A detection method of detecting vocal activity in input signals formed by successive digitized frames of predetermined duration including speech signals, noise signals and moments of silence, said method applying to the current frame a first calculation step of calculating energy parameters and zero crossing rates of the centered noise signal and a second step of classifying as noise or as speech and processing these signals in accordance with the calculated energy values and zero crossing rates, said classification as noise or as speech being linked with the energy of said input signals compared to an adaptable threshold B and to the calculated zero crossing rate, said method further being **characterized in that** the value of said threshold B varies as a function of the energy Eₙ of the current frame compared to the threshold itself.

2. A method as claimed in claim 1, **characterized in that** the variations of said threshold B according to the value of the energy Eₙ of the current frame compared to the threshold are limited to a maximum value Δ above said threshold.

3. A method as claimed in claim 2, **characterized in that** said maximum value Δ assumes a different value depending on the value of the energy Eₙ of the current frame compared to the corresponding value Eₙ₋₁ for the previous frame.

4. A method as claimed in claim 3, **characterized in that** the frames initially classified as noise because of a high zero crossing rate are subjected to a comparison of their average energy Eₙ to the threshold (B + Δ).

5. Implementation of the method as claimed in any one of claims 1 to 4, in an apparatus for vocal activity detection in input signals formed by successive digitized frames of predetermined duration including speech signals, noise signals and moments of silence, said method applying to the current frame a first calculation step of calculating energy parameters and zero crossing rates of the centered noise signal and a second step of classifying as noise or as speech and processing these signals in accordance with the calculated energy values and zero crossing rates, said classification as noise or as speech being linked with the energy of said input signals compared to an adaptable threshold B and to the calculated zero crossing rate, said apparatus being **characterized in that** it comprises in a series combination an initializing stage (10) of variables used at a later instant for the initial regulation of said variables during a first time-dependent initialization state having a duration of NINIT frames in which the input signal is always considered to be the speech signal, a calculation stage (11) for calculating the energy of each frame and the zero crossing rate of the centered noise signal, as well as a testing and processing stage (12) structured in the form of a what is called three-state automaton and provided for switching said apparatus, after the time-dependent change-over to said initialization state, into one or the other of a second or third state in which, in accordance with said calculations, each input signal is classified as a "speech + noise + silence" signal or as a "noise + silence" signal respectively.
